# EUROPÄISCHE PATENTSCHRIFT

(11) **EP 3 157 077 B1**
(45) Veröffentlichungstag und Bekanntmachung des Hinweises auf die Patenterteilung: **09.12.2020**
(21) Anmeldenummer: 15189264.3
(22) Anmeldetag: 12.10.2015
(51) Int. Cl.: H01M 2/26, H01M 2/30

(54) **BATTERIEZELLE**
BATTERY
BATTERIE

(43) Veröffentlichungstag der Anmeldung: 19.04.2017
(73) Patentinhaber: Robert Bosch GmbH, 70442 Stuttgart (DE); GS Yuasa International Ltd., Kyoto-shi, Kyoto 601-8520 (JP)
(72) Erfinder: Grauer, Benjamin, 70563 Stuttgart (DE); Berg, Anselm, 71640 Ludwigsburg (DE); Klemen, Thomas, 74360 Ilsfeld / Auenstein (DE)
(74) Vertreter: Isarpatent

(56) Entgegenhaltungen:
- JP-A- 2000 077 055
- JP-A- 2002 298 823
- JP-A- 2015 130 251
- KR-A- 20140 049 654

## Beschreibung

Die Erfindung betrifft eine Batteriezelle, die eine mit einem negativen Terminal verbundene Anode und eine mit einem positiven Terminal verbundene Kathode umfasst. Dabei sind die Anode und die Kathode um eine Wickelachse zu einem Elektrodenwickel gewickelt, wobei die Anode eine Mehrzahl von Anodenkontaktfahnen aufweist, die sich parallel zu der Wickelachse erstrecken, und/oder wobei die Kathode eine Mehrzahl von Kathodenkontaktfahnen aufweist, die sich parallel zu der Wickelachse erstrecken, wie beispielsweise aus der JP 2015 130 251 A bekannt.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen (Electric Vehicle, EV), Hybridfahrzeugen (Hybrid Electric Vehicle, HEV) sowie Plug-In-Hybridfahrzeugen (Plug-In-Hybrid Electric Vehicle, PHEV) zum Einsatz.

Lithium-Ionen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Aktivmaterial aufgebracht ist. Bei dem Aktivmaterial für die Kathode handelt es sich beispielsweise um ein Metalloxid. Bei dem Aktivmaterial für die Anode handelt es sich beispielsweise um Silizium. Aber auch Graphit ist als Aktivmaterial für Anoden verbreitet.

Die Elektroden der Batteriezelle sind folienartig ausgebildet und unter Zwischenlage eines Separators, welcher die Anode von der Kathode trennt, zu einem Elektrodenwickel gewunden. Ein solcher Elektrodenwickel wird auch als Jelly-Roll bezeichnet. Die beiden Elektroden des Elektrodenwickels sind elektrisch mit Polen der Batteriezelle, welche auch als Terminals bezeichnet werden, verbunden. Die Elektroden und der Separator sind von einem in der Regel flüssigen Elektrolyt umgeben.

Eine Batteriezelle, die eine Anode und eine Kathode umfasst, ist beispielsweise aus der DE 10 2012 223 796 A1 bekannt.

Aus der US 2010/0266893 A1 ist eine Batteriezelle mit einem zylindrisch ausgebildeten Gehäuse bekannt. Hervorstehende Elektrodenplättchen sind dabei mit einem Terminal verschweißt.

Aus der US 2003/0059678 A1 ist eine Batteriezelle mit einem prismatisch ausgebildeten Gehäuse bekannt. Ein mit einer der beiden Elektroden verbundener Elektrodenstreifen ragt dabei aus einem Elektrodenwickel heraus und ist mit einem Terminal elektrisch verbunden.

Aus der US 2011/0117399 A1 ist eine Batteriezelle bekannt, welche einen Elektrodenwickel aufweist, aus welchem Elektrodenstreifen heraus ragen, die mit beiden Elektroden verbunden sind. Die Elektrodenstreifen sind dabei jeweils mit Terminals der Batteriezelle verschweißt.

### Offenbarung der Erfindung

Die Erfindung schafft eine Batteriezelle, welche im unabhängigen Anspruch 1 definiert ist.

Erfindungsgemäß weist das negative Terminal eine Anschlussöffnung auf, in welche die Anodenkontaktfahnen hineinragen, und das positive Terminal weist eine Anschlussöffnung auf, in welche die Kathodenkontaktfahnen hineinragen. Die Anodenkontaktfahnen sind dabei elektrisch mit dem negativen Terminal verbunden, und die Kathodenkontaktfahnen sind elektrisch mit dem positiven Terminal verbunden.

Vorzugsweise sind die Anodenkontaktfahnen stoffschlüssig mit dem negativen Terminal verbunden, und die Kathodenkontaktfahnen sind stoffschlüssig mit dem positiven Terminal verbunden. Besonders vorzugsweise sind die Anodenkontaktfahnen mit dem negativen Terminal verschweißt, und/oder die Kathodenkontaktfahnen sind mit dem positiven Terminal verschweißt, beispielsweise mittels Ultraschallschweißens, Widerstandschweißens oder Laserschweißens.

Gemäß einer vorteilhaften Ausgestaltung der Erfindung sind die Anodenkontaktfahnen einstückig mit einem Stromableiter der Anode ausgebildet, und die Kathodenkontaktfahnen sind einstückig mit einem Stromableiter der Kathode ausgebildet. Zwischen den Anodenkontaktfahnen und dem Stromableiter der Anode ist also keine separate Verbindung erforderlich. Ebenso ist zwischen den Kathodenkontaktfahnen und dem Stromableiter der Kathode keine separate Verbindung erforderlich.

Vorzugsweise ist das negative Terminal an einer Deckfläche eines prismatischen, insbesondere quaderförmigen Zellengehäuses angeordnet, und das positive Terminal ist an einer Deckfläche eines prismatischen, insbesondere quaderförmigen Zellengehäuses angeordnet. Beispielsweise sind die beiden Terminals beabstandet voneinander an der selben Deckfläche des prismatischen Zellengehäuses angeordnet.

Die Anodenkontaktfahnen und die Kathodenkontaktfahnen erstrecken sich dabei vorzugsweise nebeneinander gebündelt in Richtung auf die Deckfläche des Zellengehäuses zu, an welcher das negative Terminal sowie das positive Terminal angeordnet sind.

Eine erfindungsgemäße Batteriezelle findet vorteilhaft Verwendung in einem Elektrofahrzeug (EV), in einem Hybridfahrzeug (HEV), in einem Plug-In-Hybridfahrzeug (PHEV), in einer stationären Batterie, insbesondere zur Netzstabilisierung in Haushalten, in einer Batterie in einer marinen Anwendung, beispielsweise beim Schiffsbau oder in Jet-Skis, oder in einer Batterie in einer aeronautischen Anwendung, insbesondere beim Flugzeugbau.

### Vorteile der Erfindung

Durch die erfindungsgemäße Ausgestaltung der Batteriezelle ist das Volumen innerhalb des Zellengehäuses vorteilhaft effektiver ausgenutzt. Insbesondere ist dabei inaktives Volumen verringert, und das effektiv genutzte aktive Volumen, welches die chemisch aktiven Teile, also die Elektroden, enthält, ist vergrößert. Kollektoren zur Verbindung der Anode sowie der Kathode mit den Terminals sind nicht erforderlich. Durch die direkte Verbindung der Anode sowie der Kathode mit den Terminals, unter Vermeidung zusätzlicher Kollektoren, sind auch die ohmschen Übergangswiderstände innerhalb der Batteriezelle zwischen den Terminals und den Elektroden verringert.

Ferner ist die Montage einer erfindungsgemäßen Batteriezelle gegenüber einer konventionellen Batteriezelle vorteilhaft vereinfacht. Zur Kontaktierung der Elektroden mit den Terminals ist eine Vielzahl von Verbindungstechniken denkbar, beispielsweise Ultraschallschweißen, Widerstandschweißens sowie Laserschweißen. Ferner ist der Elektrodenwickel gegen Schweißspritzer bei der Kontaktierung der Anodenkontaktfahnen sowie der Kathodenkontaktfahnen mit den Terminals geschützt. Auch ist es denkbar, mehrere, insbesondere zwei, Elektrodenwickel in einem Zellengehäuse unterzubringen und mit den Terminals der Batteriezelle zu verbinden.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung einer Batteriezelle,
- Figur 2: eine schematische, perspektivische Darstellung eines Elektrodenwickels mit losen Kontaktfahnen,
- Figur 3: eine schematische, perspektivische Darstellung eines Elektrodenwickels mit gebündelten Kontaktfahnen,
- Figur 4: eine schematische Darstellung einer Kontaktierungsstelle in einer Batteriezelle gemäß eines Ausführungsbeispiels,
- Figur 5: eine schematische Schnittdarstellung der Batteriezelle gemäß des Ausführungsbeispiels,
- Figur 6: eine schematische Schnittdarstellung einer beispielhaften Batteriezelle und
- Figur 7: eine schematische, perspektivische Schnittdarstellung der beispielhaften Batteriezelle.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

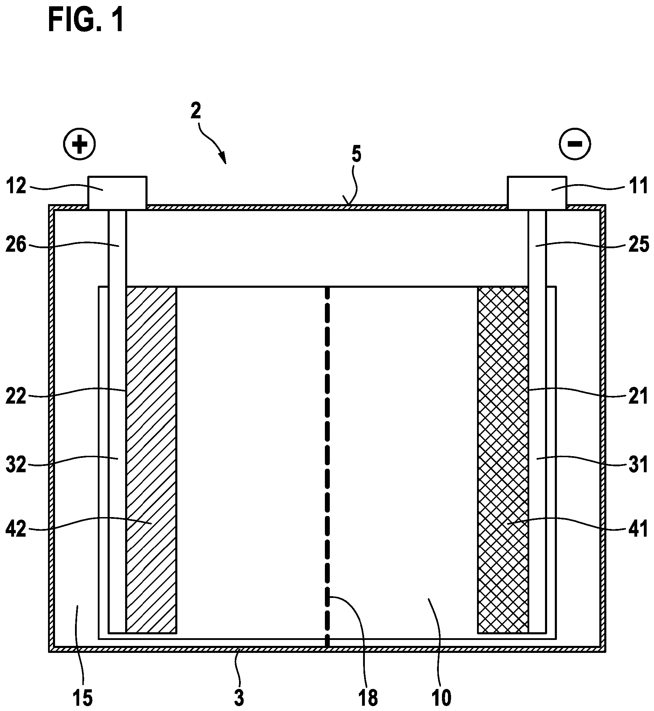

In Figur 1 ist eine Batteriezelle 2 schematisch dargestellt. Die Batteriezelle 2 umfasst ein Zellengehäuse 3, welches prismatisch, vorliegend quaderförmig, ausgebildet ist. Das Zellengehäuse 3 ist vorliegend elektrisch leitend ausgeführt und beispielsweise aus Aluminium gefertigt. Das Zellengehäuse 3 kann aber auch aus einem elektrisch isolierenden Material, beispielsweise Kunststoff, gefertigt sein.

Die Batteriezelle 2 umfasst ein negatives Terminal 11 und ein positives Terminal 12. Über die Terminals 11, 12 kann eine von der Batteriezelle 2 zur Verfügung gestellte Spannung abgegriffen werden. Ferner kann die Batteriezelle 2 über die Terminals 11, 12 auch geladen werden. Die Terminals 11, 12 sind beabstandet voneinander an einer Deckfläche 5 des prismatischen Zellengehäuses 3 angeordnet.

Innerhalb des Zellengehäuses 3 der Batteriezelle 2 ist ein Elektrodenwickel 10 angeordnet, welcher zwei Elektroden, nämlich eine Anode 21 und eine Kathode 22, aufweist. Die Anode 21 und die Kathode 22 sind jeweils folienartig ausgeführt und unter Zwischenlage eines Separators 18 zu dem Elektrodenwickel 10 gewickelt. Es ist auch denkbar, dass mehrere Elektrodenwickel 10 in dem Zellengehäuse 3 vorgesehen sind.

Die Anode 21 umfasst ein anodisches Aktivmaterial 41, welches folienartig ausgeführt ist. Das anodische Aktivmaterial 41 weist als Grundstoff vorliegend Silizium oder eine Silizium enthaltende Legierung auf. Die Anode 21 umfasst ferner einen Stromableiter 31, welcher ebenfalls folienartig ausgebildet ist. Das anodische Aktivmaterial 41 und der Stromableiter 31 der Anode 21 sind flächig aneinander gelegt und miteinander verbunden. Somit ist auch die Anode 21 folienartig ausgebildet.

Der Stromableiter 31 der Anode 21 ist elektrisch leitfähig ausgeführt und aus einem Metall gefertigt, beispielsweise aus Kupfer. Von dem Stromableiter 31 der Anode 21 ragen Anodenkontaktfahnen 25 weg und auf die Deckfläche 5 des Zellengehäuses 3 zu. Die Anodenkontaktfahnen 25 des Stromableiters 31 der Anode 21 sind elektrisch mit dem negativen Terminal 11 der Batteriezelle 2 verbunden.

Die Kathode 22 umfasst ein kathodisches Aktivmaterial 42, welches folienartig ausgeführt ist. Das kathodische Aktivmaterial 42 weist als Grundstoff ein Metalloxid auf, beispielsweise Lithium-Kobalt-Oxid (LiCoO₂). Die Kathode 22 umfasst ferner einen Stromableiter 32, welcher ebenfalls folienartig ausgebildet ist. Das kathodische Aktivmaterial 42 und der Stromableiter 32 der Kathode 22 sind flächig aneinander gelegt und miteinander verbunden. Somit ist auch die Kathode 22 folienartig ausgebildet.

Der Stromableiter 32 der Kathode 22 ist elektrisch leitfähig ausgeführt und aus einem Metall gefertigt, beispielsweise aus Aluminium. Von dem Stromableiter 32 der Kathode 22 ragen Kathodenkontaktfahnen 26 weg und auf die Deckfläche 5 des Zellengehäuses 3 zu. Die Kathodenkontaktfahnen 26 des Stromableiters 32 der Kathode 22 sind elektrisch mit dem positiven Terminal 12 der Batteriezelle 2 verbunden.

Die Anode 21 und die Kathode 22 sind durch den Separator 18 voneinander getrennt. Der Separator 18 ist ebenfalls folienartig ausgebildet. Der Separator 18 ist elektrisch isolierend ausgebildet, aber ionisch leitfähig, also für Lithiumionen durchlässig.

Das Zellengehäuse 3 der Batteriezelle 2 ist mit einem flüssigen Elektrolyt 15, oder mit einem Polymerelektrolyt, gefüllt. Der Elektrolyt 15 umgibt dabei die Anode 21, die Kathode 22 und den Separator 18. Auch der Elektrolyt 15 ist ionisch leitfähig.

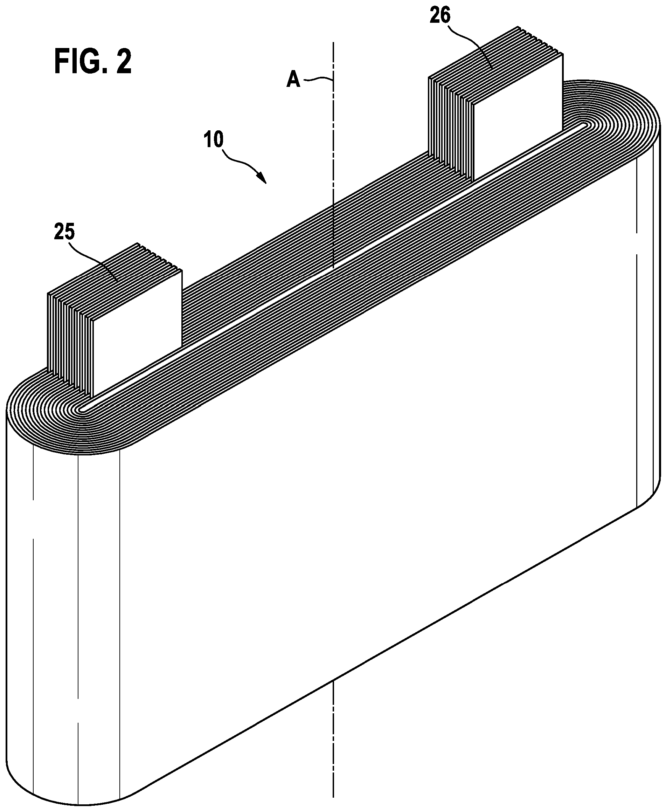

Figur 2 zeigt eine schematische, perspektivische Darstellung eines Elektrodenwickels 10 mit losen Kontaktfahnen 25, 26. Die Anode 21 und die Kathode 22 des Elektrodenwickels 10 sind dabei um eine Wickelachse A gewickelt. In Figur 2 ist der Elektrodenwickel 10 unmittelbar nach dem Wickeln dargestellt. Die Anodenkontaktfahnen 25 erstrecken sich parallel zu der Wickelachse A und sind noch lose, insbesondere geringfügig voneinander beabstandet. Auch die Kathodenkontaktfahnen 26 erstrecken sich parallel zu der Wickelachse A und sind noch lose, insbesondere geringfügig voneinander beabstandet.

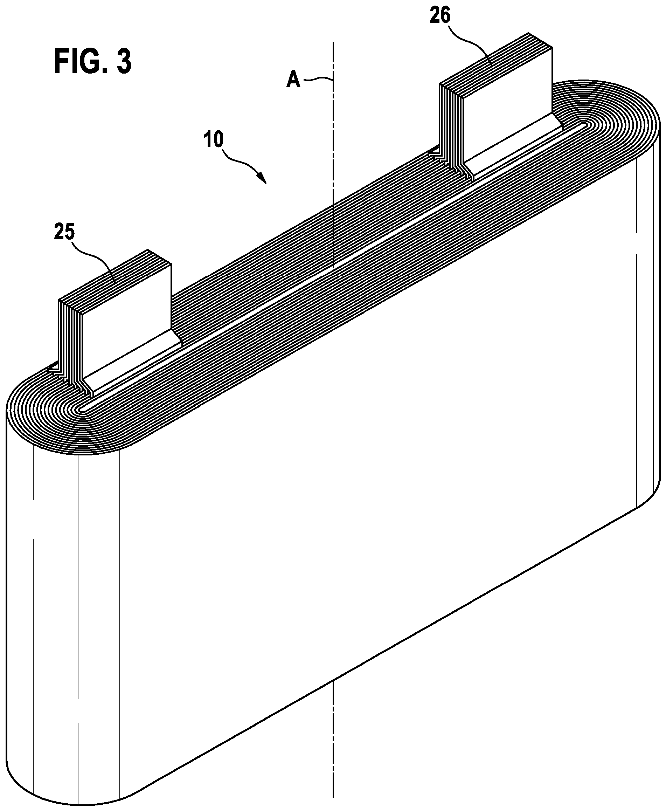

In Figur 3 ist eine schematische, perspektivische Darstellung des Elektrodenwickels 10 mit gebündelten Kontaktfahnen 25, 26 gezeigt. Dabei ist der Elektrodenwickel 10 aus Figur 2 nach einem weiteren Bearbeitungsschritt dargestellt. Die Anodenkontaktfahnen 25 sind gebündelt und erstrecken sich bereichsweise parallel zu der Wickelachse A. Die Anodenkontaktfahnen 25 liegen dabei dicht aneinander an. Auch die Kathodenkontaktfahnen 26 sind gebündelt und erstrecken sich bereichsweise parallel zu der Wickelachse A. Die Kathodenkontaktfahnen 26 liegen dabei ebenfalls dicht aneinander an.

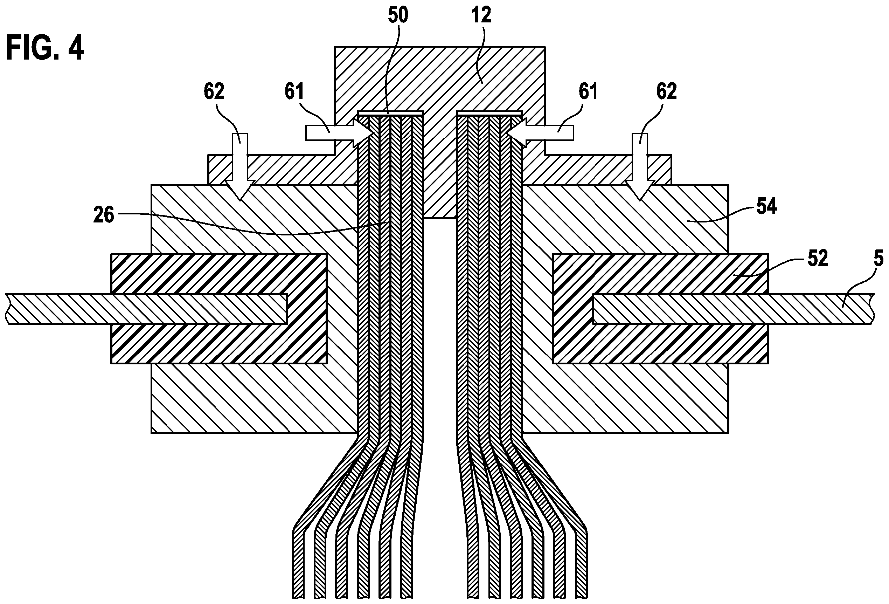

Figur 4 zeigt eine schematische Darstellung einer Kontaktierungsstelle der Kathodenkontaktfahnen 26 mit dem positiven Terminal 12 in einer Batteriezelle 2 gemäß einem Ausführungsbeispiel. Das positive Terminal 12 weist eine Anschlussöffnung 50 auf, in welche die gebündelten Kathodenkontaktfahnen 26 hinein ragen. Dabei sind die Kathodenkontaktfahnen 26 stoffschlüssig mit dem positiven Terminal 12 verbunden, vorliegend mittels einer Kontaktierungsschweißung 61 verschweißt. Die Kontaktierungsschweißung 61 ist durch Pfeile in der gezeigten Darstellung angedeutet.

Ein Niet 54 aus einem metallischen Werkstoff durchgreift die Deckfläche 5 des Zellengehäuses 3. Der Niet 54 ist mittels einer Dichtung 52 aus einem elektrisch isolierenden Material von der Deckfläche 5 des Zellengehäuses 3 isoliert. Die Kathodenkontaktfahnen 26 durchgreifen die Deckfläche 5 des Zellengehäuses 3, die Dichtung 52 sowie den Niet 54.

Der Niet 54 weist außerhalb des Zellengehäuses 3 einen Flansch auf, mit welchem das positive Terminal 12 mittels einer Befestigungsschweißung 62 verschweißt ist. Die Befestigungsschweißung 62 ist durch Pfeile in der gezeigten Darstellung angedeutet. Das positive Terminal 12 ist dabei vollständig außerhalb des Zellengehäuses 3 angeordnet.

Die hier nicht dargestellten Anodenkontaktfahnen 25 sind an einer gleichartig ausgestalteten Kontaktierungsstelle mit dem negativen Terminal 11 der Batteriezelle 2 gemäß dem Ausführungsbeispiel verbunden. Dazu weist das negative Terminal 11 ebenfalls eine Anschlussöffnung 50 auf, in welche die gebündelten Anodenkontaktfahnen 25 hinein ragen und stoffschlüssig mit dem negativen Terminal 11 verbunden, vorliegend verschweißt, sind. Das negative Terminal 11 ist dabei ebenfalls vollständig außerhalb des Zellengehäuses 3 angeordnet.

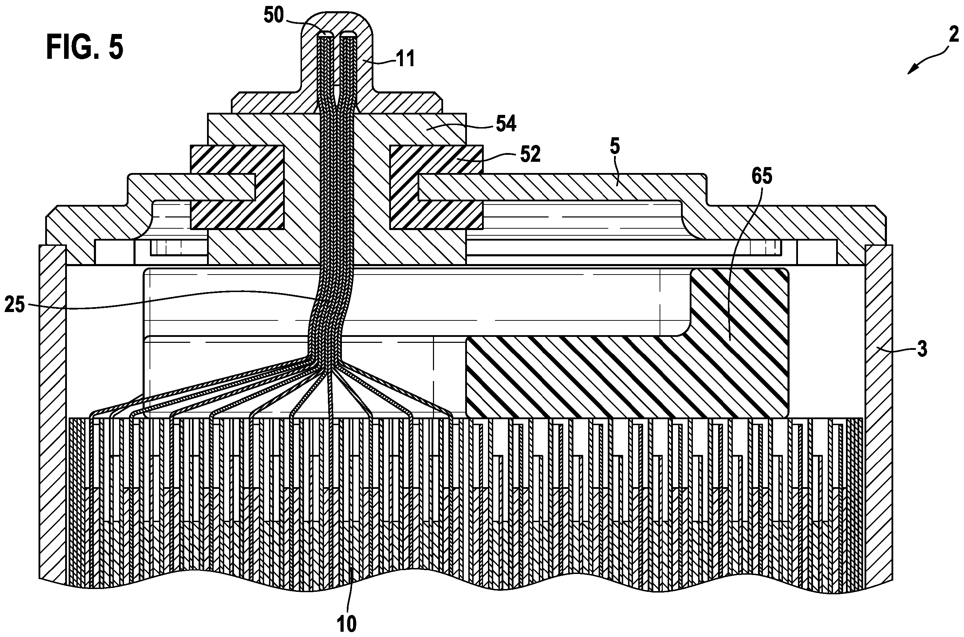

In Figur 5 ist eine schematische Schnittdarstellung der Batteriezelle 2 gemäß dem Ausführungsbeispiel gezeigt. Die Anodenkontaktfahnen 25 erstrecken sich von dem Elektrodenwickel 10 durch die Deckfläche 5 des Zellengehäuses 3, die Dichtung 52 sowie den Niet 54 hindurch bis in die Anschlussöffnung 50 des negativen Terminals 11 hinein.

Innerhalb des Zellengehäuses 3 ist ein Retainer 65 vorgesehen, welcher aus einem elektrisch isolierenden Material gefertigt ist. Der Retainer 65 ist zwischen der Deckfläche 5 des Zellengehäuses 3 und dem Elektrodenwickel 10 angeordnet. Der Retainer 65 hält einerseits den Elektrodenwickel 10 in einem definierten Abstand zu der Deckfläche 5 des Zellengehäuses 3 und isoliert zusätzlich den Elektrodenwickel 10 elektrisch von der Deckfläche 5 des Zellengehäuses 3.

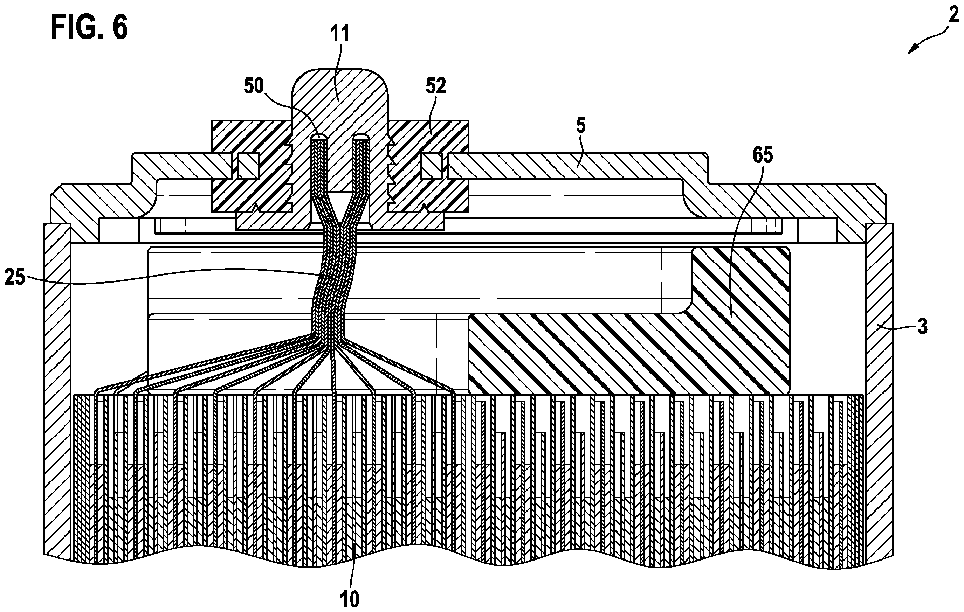

Figur 6 zeigt eine schematische Schnittdarstellung einer beispielhaften Batteriezelle 2. Das negative Terminal 11 weist eine Anschlussöffnung 50 auf, in welche die gebündelten Anodenkontaktfahnen 25 hinein ragen. Dabei sind die Anodenkontaktfahnen 25 stoffschlüssig mit dem negativen Terminal 11 verbunden, vorliegend verschweißt.

Eine Dichtung 52 aus einem elektrisch isolierenden Material durchgreift die Deckfläche 5 des Zellengehäuses 3. Das negative Terminal 11 durchgreift die Deckfläche 5 des Zellengehäuses 3 und die Dichtung 52. Mittels der Dichtung 52 ist das negative Terminal 11 elektrisch von der Deckfläche 5 des Zellengehäuses 3 isoliert.

Insbesondere ist das negative Terminal 11 in der Dichtung 52 formschlüssig gehalten. Insbesondere weisen das negative Terminal 11 und die Dichtung 52 zueinander komplementäre Vorsprünge und Einbuchtungen auf, beispielsweise in Form von Rastnasen.

Das hier nicht dargestellte positive Terminal 12 weist ebenfalls eine Anschlussöffnung 50 auf, in welche die gebündelten Kathodenkontaktfahnen 26 hinein ragen. Dabei sind die Kathodenkontaktfahnen 26 stoffschlüssig mit dem positiven Terminal 12 verbunden, vorliegend verschweißt.

Das positive Terminal 12 durchgreift ebenfalls die Deckfläche 5 des Zellengehäuses 3 und eine weitere Dichtung 52, mittels welcher das positive Terminal 12 elektrisch von der Deckfläche 5 des Zellengehäuses 3 isoliert ist. Dabei ist das positive Terminal 12 in der Dichtung 52 formschlüssig gehalten. Insbesondere weisen das positive Terminal 12 und die Dichtung 52 zueinander komplementäre Vorsprünge und Einbuchtungen auf, beispielsweise in Form von Rastnasen.

Die Anodenkontaktfahnen 25 sowie die hier nicht gezeigten Kathodenkontaktfahnen 26 befinden sich dabei annähernd vollständig innerhalb des Zellengehäuses 3 der Batteriezelle 2.

Innerhalb des Zellengehäuses 3 ist ein Retainer 65 vorgesehen, welcher aus einem elektrisch isolierenden Material gefertigt ist. Der Retainer 65 ist zwischen der Deckfläche 5 des Zellengehäuses 3 und dem Elektrodenwickel 10 angeordnet. Der Retainer 65 hält einerseits den Elektrodenwickel 10 in einem definierten Abstand zu der Deckfläche 5 des Zellengehäuses 3 und isoliert zusätzlich den Elektrodenwickel 10 elektrisch von der Deckfläche 5 des Zellengehäuses 3.

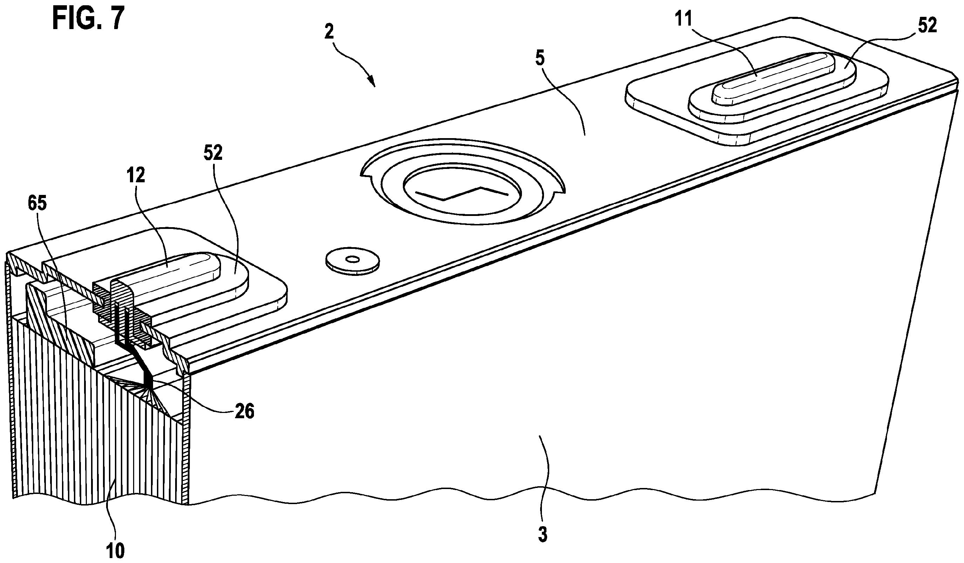

In Figur 7 ist eine schematische, perspektivische Schnittdarstellung der beispielhaften Batteriezelle 2 gezeigt. Die Batteriezelle 2 ist dabei in einem Bereich des positiven Terminals 12 geschnitten.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Batteriezelle (2), insbesondere Lithium-Ionen-Batteriezelle, umfassend
eine mit einem negativen Terminal (11) verbundene Anode (21) und
eine mit einem positiven Terminal (12) verbundene Kathode (22), wobei die Anode (21) und die Kathode (22) um eine Wickelachse (A) zu einem Elektrodenwickel (10) gewickelt sind, wobei
die Anode (21) eine Mehrzahl von Anodenkontaktfahnen (25) aufweist,
die sich parallel zu der Wickelachse (A) erstrecken und
die Kathode (22) eine Mehrzahl von Kathodenkontaktfahnen (26) aufweist, die sich parallel zu der Wickelachse (A) erstrecken,
wobei das negative Terminal (11) eine erste Anschlussöffnung (50) aufweist, in welche die Anodenkontaktfahnen (25) hineinragen, und
das positive Terminal (12) eine zweite Anschlussöffnung (50) aufweist, in welche die Kathodenkontaktfahnen (26) hineinragen,
wobei die Anodenkontaktfahnen (25) in der ersten Anschlussöffnung (50) mit dem negativen Terminal (11) verbunden sind und die Kathodenkontaktfahnen (26) in der zweiten Anschlussöffnung (50) mit dem positiven Terminal (12) verbunden sind,
wobei das negative Terminal (11) vollständig außerhalb des Zellengehäuses (3) angeordnet ist und das positive Terminal (12) vollständig außerhalb des Zellengehäuses (3) angeordnet ist,
wobei das negative Terminal (11) und das positive Terminal (12) an einer Deckfläche (5) des Zellengehäuses (3) angeordnet sind;
wobei ein erster Niet (54) und ein zweiter Niet (54) die Deckfläche (5) des Zellengehäuses (3) durchgreifen,
wobei die Anodenkontaktfahnen (25) die Deckfläche (5) und den ersten Niet (54) durchgreifen und die Kathodenkontaktfahnen (26) die Deckfläche (5) und den zweiten Niet (54) durchgreifen, und
wobei der erste Niet (54) außerhalb des Zellengehäuses (3) einen ersten Flansch aufweist, mit welchem das negative Terminal (11) verschweißt ist und
der zweite Niet (54) außerhalb des Zellengehäuses (3) einen zweiten Flansch aufweist, mit welchem das positive Terminal (12) verschweißt ist.

2. Batteriezelle (2) nach Anspruch 1, **dadurch gekennzeichnet, dass** die Anodenkontaktfahnen (25) stoffschlüssig mit dem negativem Terminal (11) verbunden sind und dass die Kathodenkontaktfahnen (26) stoffschlüssig mit dem positivem Terminal (12) verbunden sind.

3. Batteriezelle (2) nach einem der vorstehenden Ansprüche, **dadurch gekennzeichnet, dass** die Anodenkontaktfahnen (25) einstückig mit einem Anoden-Stromableiter (31) der Anode (21) ausgebildet sind und dass die Kathodenkontaktfahnen (26) einstückig mit einem Kathoden-Stromableiter (32) der Kathode (22) ausgebildet sind.

4. Batteriezelle (2) nach einem der vorstehenden Ansprüche, **dadurch gekennzeichnet, dass** das negative Terminal (11) und das positive Terminal (12) an der Deckfläche (5) eines prismatischen, insbesondere quaderförmigen, Zellengehäuses (3) angeordnet sind.

5. Batteriezelle (2) nach Anspruch 4, **dadurch gekennzeichnet, dass** die Anodenkontaktfahnen (25) und die Kathodenkontaktfahnen (26) sich nebeneinander gebündelt in Richtung auf die Deckfläche (5) zu erstrecken.

6. Verwendung einer Batteriezelle (2) nach einem der vorstehenden Ansprüche in einem Elektrofahrzeug (EV), in einem Hybridfahrzeug (HEV), in einem Plug-In-Hybridfahrzeug (PHEV), in einer stationären Batterie, in einer Batterie in einer marinen Anwendung oder in einer Batterie in einer aeronautischen Anwendung.

## Claims

1. Battery cell (2), in particular lithium-ion battery cell, comprising
an anode (21) connected to a negative terminal (11) and a cathode (22) connected to a positive terminal (12), wherein the anode (21) and the cathode (22) are wound around a winding axis (A) to form an electrode winding (10), wherein
the anode (21) has a plurality of anode contact tabs (25) that extend parallel to the winding axis (A) and the cathode (22) has a plurality of cathode contact tabs (26) that extend parallel to the winding axis (A), wherein the negative terminal (11) has a first connection opening (50) into which the anode contact tabs (25) project and
the positive terminal (12) has a second connection opening (50) into which the cathode contact tabs (26) project,
wherein the anode contact tabs (25) in the first connection opening (50) are connected to the negative terminal (11) and the cathode contact tabs (26) in the second connection opening (50) are connected to the positive terminal (12),
wherein the negative terminal (11) is arranged completely outside the cell housing (3) and the positive terminal (12) is arranged completely outside the cell housing (3),
wherein the negative terminal (11) and the positive terminal (12) are arranged on a cover surface (5) of the cell housing (3);
wherein a first rivet (54) and a second rivet (54) grip both sides of the cover surface (5) of the cell housing (3),
wherein the anode contact tabs (25) grip both sides of the cover surface (5) and the first rivet (54) and the cathode contact tabs (26) grip both sides of the cover surface (5) and the second rivet (54), and
wherein the first rivet (54), outside the cell housing (3), has a first flange to which the negative terminal (11) is welded and
the second rivet (54), outside the cell housing (3), has a second flange to which the positive terminal (12) is welded.

2. Battery cell (2) according to Claim 1, **characterized in that** the anode contact tabs (25) are connected to the negative terminal (11) in a materially bonded manner and **in that** the cathode contact tabs (26) are connected to the positive terminal (12) in a materially bonded manner.

3. Battery cell (2) according to either of the preceding claims, **characterized in that** the anode contact tabs (25) are formed integrally with an anode current collector (31) of the anode (21) and **in that** the cathode contact tabs (26) are formed integrally with a cathode current collector (32) of the cathode (22) .

4. Battery cell (2) according to one of the preceding claims, **characterized in that** the negative terminal (11) and the positive terminal (12) are arranged on the cover surface (5) of a prismatic, in particular cuboidal, cell housing (3).

5. Battery cell (2) according to Claim 4, **characterized in that** the anode contact tabs (25) and the cathode contact tabs (26) extend, bundled next to one another, in the direction of the cover surface (5).

6. Use of a battery cell (2) according to one of the preceding claims in an electric vehicle (EV), in a hybrid vehicle (HEV), in a plug-in hybrid vehicle (PHEV), in a stationary battery, in a battery in a marine application or in a battery in an aeronautical application.

## Revendications

1. Cellule de batterie (2), notamment cellule de batterie lithium-ion, comprenant :
une anode (21) reliée avec un terminal négatif (11) et une cathode (22) reliée avec un terminal positif (12), l'anode (21) et la cathode (22) étant enroulées autour d'un axe d'enroulement (A) en un enroulement d'électrode (10),
l'anode (21) comprenant une pluralité de fiches de contact d'anode (25), qui s'étendent parallèlement à l'axe d'enroulement (A) et
la cathode (22) comprenant une pluralité de fiches de contact de cathode (26), qui s'étendent parallèlement à l'axe d'enroulement (A),
le terminal négatif (11) comprenant une première ouverture de raccordement (50), dans laquelle les fiches de contact d'anode (25) sont en saillie, et le terminal positif (12) comprenant une deuxième ouverture de raccordement (50), dans laquelle les fiches de contact de cathode (26) sont en saillie,
les fiches de contact d'anode (25) étant reliées dans la première ouverture de raccordement (50) avec le terminal négatif (11) et les fiches de contact de cathode (26) étant reliées dans la deuxième ouverture de raccordement (50) avec le terminal positif (12),
le terminal négatif (11) étant agencé entièrement à l'extérieur du boîtier de cellule (3) et le terminal positif (12) étant agencé entièrement à l'extérieur du boîtier de cellule (3),
le terminal négatif (11) et le terminal positif (12) étant agencés sur une surface de recouvrement (5) du boîtier de cellule (3) ;
un premier rivet (54) et un deuxième rivet (54) traversant la surface de recouvrement (5) du boîtier de cellule (3),
les fiches de contact d'anode (25) traversant la surface de recouvrement (5) et le premier rivet (54) et les fiches de contact de cathode (26) traversant la surface de recouvrement (5) et le deuxième rivet (54), et
le premier rivet (54) comprenant une première bride à l'extérieur du boîtier de cellule (3), avec laquelle le terminal négatif (11) est soudé, et
le deuxième rivet (54) comprenant une deuxième bride à l'extérieur du boîtier de cellule (3), avec laquelle le terminal positif (12) est soudé.

2. Cellule de batterie (2) selon la revendication 1, **caractérisée en ce que** les fiches de contact d'anode (25) sont reliées par accouplement de matière avec le terminal négatif (11) et **en ce que** les fiches de contact de cathode (26) sont reliées par accouplement de matière avec le terminal positif (12).

3. Cellule de batterie (2) selon l'une quelconque des revendications précédentes, **caractérisée en ce que** les fiches de contact d'anode (25) sont formées d'un seul tenant avec un collecteur de courant d'anode (31) de l'anode (21) et **en ce que** les fiches de contact de cathode (26) sont formées d'un seul tenant avec un collecteur de courant de cathode (32) de la cathode (22) .

4. Cellule de batterie (2) selon l'une quelconque des revendications précédentes, **caractérisée en ce que** le terminal négatif (11) et le terminal positif (12) sont agencés sur la surface de recouvrement (5) d'un boîtier de cellule (3) prismatique, notamment parallélépipédique.

5. Cellule de batterie (2) selon la revendication 4, **caractérisée en ce que** les fiches de contact d'anode (25) et les fiches de contact de cathode (26) s'étendent en faisceau les unes à côté des autres en direction de la surface de recouvrement (5).

6. Utilisation d'une cellule de batterie (2) selon l'une quelconque des revendications précédentes dans un véhicule électrique (EV), dans un véhicule hybride (HEV), dans un véhicule hybride plug-in (PHEV), dans une batterie stationnaire, dans une batterie dans une application marine ou dans une batterie dans une application aéronautique.
